# EUROPÄISCHE PATENTSCHRIFT

(11) **EP 0 703 927 B1**
(45) Veröffentlichungstag und Bekanntmachung des Hinweises auf die Patenterteilung: **11.03.1998**
(21) Anmeldenummer: 94918335.4
(22) Anmeldetag: 17.05.1994
(51) Int. Cl.: C08B 31/18, C08B 15/04, C11D 3/22

(54) **HERSTELLUNG VON POLYCARBOXYLATEN AUF POLYSACCHARID-BASIS**
PREPARATION OF POLYCARBOXYLATES BASED ON POLYSACCHARIDES
FABRICATION DE POLYCARBOXYLATES A BASE DE POLYSACCHARIDES

(30) Priorität: 26.05.1993 DE 4317519
(43) Veröffentlichungstag der Anmeldung: 03.04.1996
(73) Patentinhaber: Henkel Kommanditgesellschaft auf Aktien, 40191 Düsseldorf (DE)
(72) Erfinder: ENGELSKIRCHEN, Konrad, D-40668 Meersbusch (DE); FISCHER, Herbert, D-40229 Düsseldorf (DE)
(86) Internationale Anmeldenummer: EP9401599
(87) Internationale Veröffentlichungsnummer: WO9428030

(56) Entgegenhaltungen:
- WO-A-93/08251
- DD-A- 245 823
- US-A- 2 448 892
- US-A- 2 472 590
- US-A- 3 377 339

## Beschreibung

Die Erfindung betrifft ein Verfahren zur Herstellung von Polycarboxylaten durch selektive Oxidation von Polysacchariden mit Stickstoffdioxid.

Die Herstellung von Polycarboxylaten durch oxidative Behandlung von Polysacchariden, beispielsweise Cellulose, Stärke und Dextrinen, ist ausführlich in der Literatur beschrieben. Verwiesen wird beispielsweise auf Houben-Weyl "Methoden der organischen Chemie", Thieme-Verlag, Stuttgart (1987) Bd. E 20, Makromolekulare Stoffe, hier das Unterkapitel "Polysaccharid-Derivate" bearbeitet von Dr. K. Engelskirchen, a.a.0. Seite 2042 ff, insbesondere Seite 2124 ff (Oxidationsprodukte der Cellulose) und Seite 2166 ff (Oxidierte Stärken). Angaben zum Herstellungsverfahren finden sich auch in der Veröffentlichung "Cellulose Chemistry and Its Applications" (1983), John Wiley & Sons, Chichester, GB, dort insbesondere T.P.Nevell, "Oxidation of Cellulose" (Kapitel 10) sowie in der dort zitierten Literatur (a.a.O. Seite 262 bis 265).

Eine Vielzahl von Oxidationsmitteln ist für die Oxidation von Polysacchariden, insbesondere von ausschließlich aus Glucose aufgebauten Polyglucosanen gebräuchlich. Genannt seien beispielsweise (Luft)-Sauerstoff, Wasserstoffperoxid, Natriumhypochlorit beziehungsweise -bromit, Periodsäure beziehungsweise Periodate, Blei(IV)-Acetat, Stickstoffdioxid und Cer(IV)-Salze. Die Oxidationsmittel reagieren sehr unterschiedlich mit den Anhydroglucoseeinheiten, vgl. beispielsweise die Formelbilder in Houben-Weyl a.a.O. Seite 2124. So bewirken Perjodate oder Blei(IV)-Acetat eine C-C-Spaltung der Anhydroglucose-Ringe; man erhält aus Cellulose die sogenannte 2,3-Dialdehydcellulose und analog aus Stärke Dialdehydstärke. Bei der Einwirkung von Stickstoffdioxid auf Cellulose überwiegt die Oxidation der primären Alkoholgruppe zur Carboxylgruppe. Das Oxidationsmittel, das in der Regel im Gleichgewicht mit Distickstofftetroxid vorliegt, kann dabei gasförmig oder gelöst in einem inerten organischen Lösungsmittel eingesetzt werden, vgl. auch hier Houben-Weyl a.a.0. Seite 2125 und die dort in diesem Zusammenhang genannte Primärliteratur. Auch von der Stärke ausgehend lassen sich entsprechend weitgehend selektive Oxidationen der primären Alkoholgruppe der Anhydroglucoseeinheiten zur Carboxylgruppe durchführen. So ist aus der US-amerikanischen Patentschrift US 2 472 590 die Oxidation von Stärke mit gasförmigem oder in Wasser beziehungsweise in verschiedenen organischen Lösungsmitteln gelöstem Stickstoffdioxid bei Raumtemperatur und Normaldruck bekannt. Die Reaktionstemperatur ist hier relativ niedrig gewählt.

Unter diesen Bedingungen erhält man die annähernd vollständige Umwandlung der primären Alkoholgruppen der Polysaccharide in Carboxylgruppen erst nach sehr langen Reaktionszeiten, die unter Umständen bis zu mehrere Tage betragen können. Außerdem werden bei den bekannten Verfahren hohe Stickstoffdioxidmengen, bezogen auf zu oxidierendes Polysaccharid, benötigt. Die langen Reaktionszeiten erschweren eine kontinuierliche Verfahrensführung und lassen in der Praxis nur eine diskontinuierliche Fahrweise mit relativ geringen Ansatzmengen zu. Ein weiteres Problem stellt die Exothermie der Reaktion dar.

Die vorliegende Erfindung will die Herstellung derartiger Oxidationsprodukte von Polysacchariden verbessern, um größere Mengen auf wirtschaftlichere Weise herstellen zu können und damit ihre Verfügbarkeit zu sichern. Die entstehenden Polycarboxylate sind nämlich potentielle Builder- beziehungsweise Co-Builder-Komponenten für Wasch- und Reinigungsmittel. Dies gilt auch für die Salze derartiger Polycarboxylate, insbesondere ihre wasserlöslichen Salze. Der Einsatz von oxidierten Polysaccharidverbindungen zur Waschkraftverstärkung von Wasch- und/oder Reinigungsmitteln ist an sich seit Jahrzehnten bekannt und immer wieder untersucht worden (z. B. niederländische Patentschriften NL 69 883 und NL 78 087). Der Ersatz von Builder-Systemen auf Phosphatbasis durch mit Lewis-Säuren behandelter 6-Carboxycellulose wird in den US-amerikanischen Patentschriften US 3 740 339 und US 3 790 561 beschrieben. Auch in der niederländischen Patentanmeldung NL 70/02 500 wird der Einsatz oxidierter Polysaccharid-Derivate als Builder-System zur Steigerung der Waschkraft insbesondere in Textilwaschmitteln vorgeschlagen. Hier ist allerdings nicht auf selektiv am C₆-Atom oxidierte Derivate, sondern auf durch Spaltung der Anhydroglucoseeinheiten zwischen C₂ und C₃ entstehende Oxidationsprodukte abgestellt. Schließlich beschreibt die europäische Patentanmeldung EP 425 369 tensidhaltige Stoffgemische zur Textilwäsche, die ein Builder-System aus konventioneller Phosphatverbindung, Zeolith und Oxidationsprodukten von Cellulose, Stärke oder Glucosesirup enthalten. Nachvollziehbare Angaben zur Herstellung der dort beschriebenen oxidierten Saccharidverbindungen sind nicht angegeben. Außerdem wird eine Stabilisierung der primär anfallenden Polysaccharidoxidate durch eine katalytische Hydrierung als wünschenswert bezeichnet.

Die erfindungsgemäße Lehre geht von der überraschenden Erkenntnis aus, daß Polycarboxylate aus Polysacchariden in größerem, industriellen Maßstab in einem einfachen Verfahren kostengünstig in hohen Ausbeuten zu gewinnen sind, wenn man die Oxidationsreaktion in einem kontinuierlichen Verfahren mit Stickstoffdioxid/Distickstofftetroxid bei Temperaturen oberhalb von 80°C bei Verweilzeiten von 1 bis 30 min, bevorzugt von 5 bis 30 min, insbesondere von 10 bis 30 min durchführt. Bei diesen Temperaturen läuft die Oxidationsreaktion mit für kontinuierliche Verfahren ausreichender Geschwindigkeit ab. Überraschenderweise wirken sich die hohen Temperaturen auf die erzielbaren Oxidationsgrade der Polysaccharide und die Eigenschaften ihrer Carboxylderivate, insbesondere auf deren Viskositätszahlen, nicht nachteilig aus. Die Formulierung "Stickstoffdioxid/Distickstofftetroxid" steht dabei für das unter den jeweiligen Reaktionsbedingungen vorliegende Gleichgewichtsgemisch aus Stickstoffdioxid und seinem Dimeren Distickstofftetroxid.

Gegenstand der Erfindung ist dementsprechend ein Verfahren zur Herstellung von Polycarbonsäuren oder deren Salzen aus Polysacchariden durch Oxidation mit Stickstoffdioxid/Distickstofftetroxid unter Umwandlung zumindest eines Teils der primären Alkoholgruppen der Polysaccharide in Carboxylgruppen sowie gegebenenfalls wenigstens anteilsweiser Neutralisation der entstehenden Carbonsäuregruppen, wobei man die Oxidationsreaktion in einem kontinuierlichen Verfahren bei einer Temperatur oberhalb von 80 °C in Gegenwart oder Abwesenheit von Sauerstoff in einem geschlossenen Reaktionssystem bei Drücken von 3 bar bis 15 bar absolut, gemessen bei der Reaktionstemperatur durchführt und eine Verweilzeit des Reaktionsgemisches in der Reaktionszone von 1 bis 30 min, bevorzugt 5 bis 30 min und insbesondere von 10 bis 30 min einstellt.

Die Oxidationsreaktion wird dabei in der Regel unterhalb von etwa 160 °C, vorzugsweise bei Temperaturen von 100 °C bis 140 °C, bevorzugt 100 °C bis 130 °C und insbesondere 110 °C bis 120°C durchgeführt. Bei der Oxidation in Abwesenheit von Sauerstoff wird Stickstoffdioxid/Distickstofftetroxid vorzugsweise in solchen Mengen eingesetzt, daß bei rechnerisch vollständiger Verschiebung des Gleichgewichtes auf die Seite des Stickstoffdioxids dieses in Mengen von 0,1 bis 3 Molequivalenten, insbesondere 0,3 bis 2 Molequivalenten, bezogen auf den eine primäre Alkoholgruppe enthaltenden Monomerbaustein des Polysaccharids, enthalten ist. Falls in Gegenwart von Sauerstoff gearbeitet wird, werden solche Mengen an Stickstoffdioxid/Distickstofftetroxid vorgeschlagen, daß bei rechnerisch vollständiger Verschiebung des Gleichgewichtes auf die Seite des Stickstoffdioxids dieses in Mengen von höchstens 2 Molequivalenten, insbesondere 0,1 bis 1 Molequivalenten, bezogen auf den eine primäre Alkoholgruppe enthaltenden Monomerbaustein des Polysaccharids, enthalten ist. Die genannten bevorzugten Drücke im Reaktionssystem stellen sich bei ausschließlicher Verwendung von Stickstoffdioxid, also in Abwesenheit von Sauerstoff, unter Reaktionsbedingungen ein und werden bei der Verwendung von Sauerstoff als Cooxidans durch Aufpressen von gasförmigem Sauerstoff oder von einem Gemisch daraus mit unter den Reaktionsbedingungen inertem Gas eingestellt. Bei Verwendung von Sauerstoff als Cooxidans wird vorzugsweise ein Druck bis zu 10 bar, insbesondere ein Druck von 3 bis 6 bar eingestellt. Das Aufpressen kann mehrfach, gewünschtenfalls kontinuierlich, während der Reaktion erfolgen. Als besonderer Vorteil ist zu erwähnen, daß die Oxidationsreaktion temperatur- oder druckabhängig über die Sauerstoffdosierung gesteuert werden kann. Vorzugsweise regelt man die Sauerstoffzugabe so, daß die Reaktionstemperatur im obengenannten Bereich von 100 °C bis 160 °C bleibt. Dabei kann die Reaktionstemperatur während des Ablaufs der Oxidation, die zweckmäßigerweise unter intensiver Durchmischung der Reaktionspartner erfolgt, in der Regel ohne äußere Heizung allein durch die Zugabe von Sauerstoff gehalten werden.

Als inerte, das heißt bei den jeweils gewünschten Verfahrensbedingungen nicht reagierende Gase können Edelgase wie Helium oder Argon und Kohlendioxid, insbesondere aber Stickstoff, aber auch beliebige Mischungen derartiger Gase eingesetzt werden. Der Sauerstoffgehalt in der Gasmischung beträgt dabei vorzugsweise 1 Vol.-% bis 30 Vol.-%, insbesondere 3 Vol.-% bis 10 Vol.-%. Eine bevorzugte Ausführungsform des erfindungsgemäßen Verfahrens besteht in der Zuführung von Sauerstoff durch das Aufpressen von Luft, insbesondere von Syntheseluft.

Die Oxidation der Polysaccharide kann alternativ im Suspensionsverfahren erfolgen, bei dem sie als Suspension in einer unter den Reaktionsbedingungen weitgehend inerten Flüssigkeit eingesetzt werden, oder man kann die Oxidation als Gas-Feststoff-Reaktion mit pulverförmigem Polysaccharid durchführen.

Bei der Oxidation im Suspensionsverfahren sind als Suspensionsmittel für das Polysaccharid organische Flüssigkeiten geeignet, die einerseits Stickstoffdioxid/Distickstofftetroxid sowie Sauerstoff gut lösen und andererseits diesen gegenüber unter den Reaktionsbedingungen weitgehend inert sind. In Frage kommende Suspensionsmittel sind Kohlenwasserstoffe und vor allem halogenierte Kohlenwasserstoffe, insbesondere Tetrachlorkohlenstoff. Dabei ist eine breite Variation der Suspensionsmittelmenge ohne signifikanten Einfluß auf das Oxidationsergebnis möglich. In der Regel liegt das Gewichtsverhältnis von Suspensionsmittel zu Polysaccharid im Bereich von 3:1 bis 8:1. Nach Durchlaufen der Reaktionszone wird das Suspensionsmittel, gegebenenfalls nach Entspannen des Überdruckes, vom oxidierten Polysaccharid abgetrennt, was durch einfache Filtration oder Zentrifugieren geschehen kann. Es kann direkt oder gewünschtenfalls nach Aufarbeitung in die Anmaischstufe zurückgeführt werden. Das Oxidationsprodukt wird gewünschtenfalls mit einem organischen Lösungsmittel und/oder Wasser beziehungsweise Gemischen aus diesen gewaschen und getrocknet. Der Trocknungsschritt nach dem Waschen mit Wasser kann entfallen, wenn die Weiterverarbeitung des erhaltenen Polycarboxylates zu wasserhaltigen flüssigen oder pastenförmigen Produkten erfolgen soll.

Die Reaktion kann in üblichen Reaktoren für Gas-Flüssigkeits-Reaktionen, aber auch in Durchlaufmischern (Kontimischer oder Online-Mischer) durchgeführt werden. So sind Rohrreaktoren mit darin angeordneten statischen Mischern, aber auch Rührkesselkaskaden mit mindestens 2 Stufen und auch Rührkolonnen, die in mindestens 2 Kammern unterteilt sind, geeignet. Bei dem Einsatz einer Rührkesselkaskade kann bei jedem einzelnen Kessel eine separate Temperatur- und Druckeinstellung erfolgen. Als Reaktionsapparat ist aber auch eine in Kammern unterteilte Kolonne möglich. Diese der Kaskade äquivalente Ausführungsform kann unter bestimmten Voraussetzungen wirtschaftlicher sein. Durch die Aufteilung der Kolonne in Schüsse ist eine separate Kühlung bzw. Heizung einzelner Abschnitte ähnlich wie bei der Kaskade möglich. Nicht nur die Suspensionsflüssigkeit kann, wie oben erwähnt, rezirkuliert werden, sondern dies gilt auch für das stickstoffdioxid/distickstofftetroxidhaltige Gasgemisch.

Die suspensionsdurchflossenen Rohrleitungen werden nach den Kriterien ausgewählt, daß einerseits die Strömungsgeschwindigkeit der Suspension mindestens dreimal so groß sein soll wie die Sinkgeschwindigkeit der Teilchen und daß andererseits der spezifische Druckverlust im Minimum oder nahe dabei liegen sollte. Bei Beachtung dieser Grundsätze ist eine störungsfreie Förderung im gesamten System möglich.

Die Derivatisierung der Polysaccharide kann aber auch in Abwesenheit eines Suspensions- oder Lösungsmittels durchgeführt werden. Dabei wirken die Oxidationsmittel (Stickstoffdioxid mit gegebenenfalls Sauerstoff) als gasförmige Reaktionspartner direkt auf die festen, intensiv durchmischten Substrate ein. In einer weiteren Ausführungsform der Erfindung setzt man also pulverförmiges Polysaccharid in Abwesenheit eines Suspensions- oder Lösungsmittels ein und führt die Reaktion in einem Gas-Feststoff-Reaktor durch. Die Reaktion kann man in einem Schüttschichtreaktor, insbesondere einem Drehrohrofen durchführen. Es ist ebenfalls möglich, die Reaktion in einem Wirbelschichtreaktor, insbesondere einem Fließbettreaktor, durchzuführen. Eine andere Alternative besteht darin, die Reaktion in einem Durchlaufmischer, insbesondere Kontimischer oder Online-Mischer, ablaufen zu lassen. Auch der Einsatz einer Vibrationsrinne ist möglich.

Insbesondere beim Einsatz von Stärke als Polysaccharid, die im nativen Zustand zur Agglomeration und zur Kanalbildung in einem Fließbettreaktor neigt, kann das Fließverhalten durch Zusätze von Additiven, unter anderem Magnesiumoxid, Calciumfluorid, Calciumphosphat oder Kieselgel, insbesondere hochdisperse, pyrogene Kieselsäure, z.B. Aerosil^{(R)} (Handelsprodukt der Fa. Degussa AG), signifikant verbessert werden. Bereits beim Einsatz niedriger Mengen, z.B. 0,1 bis 5 Gew.-%, insbesondere 0,25 bis 1 Gew.-% der Additive wird die Agglomerationsneigung stark herabgesetzt. Auf diese Weise behandelte Stärken zeigen hinsichtlich ihrer Durchmischbarkeit ein flüssigkeitsähnliches Verhalten. Bei diesem Trockenoxidationsverfahren kann das Reaktionsgemisch nach der Reaktion direkt in Wasser aufgenommen und über Wasserwäschen und Filtrationsprozesse gereinigt und isoliert werden. Ein erheblicher Teil der am Ende der Reaktionszone vorliegenden Stickoxide kann über einfache Entgasungsprozesse entfernt werden. So führt bereits eine einfache Vakuumbehandlung der Reaktionsmischung zu Produkten mit niedrigen Nitrit- und Nitratgehalten. Vorteilhaft ist es auch, die Gasphase am Ende der Reaktionszone nach Kühlung und, falls die Oxidation des Polysaccharids in Abwesenheit von Sauerstoff durchgeführt wird, Oxidation des Hauptreduktionsproduktes Stickstoffmonoxid zu Stickstoffdioxid wieder zurückzuführen. Die Stickstoffoxide können damit, gegebenenfalls zusammen mit Sauerstoff und den Inertgasen, in einem geschlossenen System rezirkuliert werden.

Die Natur des eingesetzten Polysaccharids ist im erfindungsgemäßen Verfahren weitgehend unkritisch. Voraussetzung ist lediglich, daß es primäre Alkoholgruppen enthaltende Kohlenhydrateinheiten enthält. In Frage kommen alle nativen Polyglucosane, insbesondere Stärke und/oder Cellulose, aber auch andere Polysaccharide, zum Beispiel Polygalactomannane wie Guaran und Carubin. Die Polysaccharide können auch in chemisch oder physikalisch modifizierter Form verwendet werden, sofern sie noch oxidierbare primäre Alkoholgruppen enthalten. Aus wirtschaftlichen Gründen sind Stärken unterschiedlicher Provenienz, insbesondere Kartoffelstärke, Weizenstärke, Maisstärke oder Tapiokastärke , bevorzugt. Das eingesetzte Polysaccharid enthält vorzugsweise nicht mehr als 20 Gew.-%, insbesondere 4 Gew.-% bis 10 Gew.-% Wasser.

Die Oxidationsreaktion des erfindungsgemäßen Verfahrens wird unter Einsatz der genannten Polyglucosane insbesondere mit solchen Verweilzeiten durchgeführt, daß das Oxidationsprodukt im statistischen Mittel zu wenigstens 15 Mol-%, aus vorzugsweise zu wenigstens 25 Mol-%, insbesondere zu wenigstens 35 Mol-% bis 40 Mol-% aus oxidierten Anhydroglucoseeinheiten der Formel I 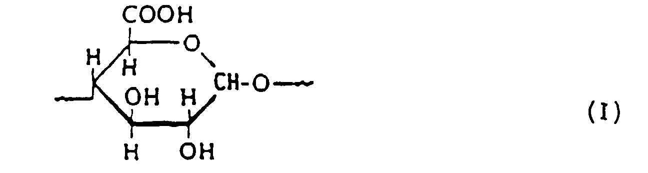 besteht, was einem Carboxylgruppengehalt von mindestens 4 Gew.-% entspricht, wobei als weiterer Vorteil keine wesentlichen Mengen anderer Oxidations-Folgeprodukte vorliegen. Das Oxidationsprodukt weist dann vorzugsweise einen Gehalt an oxidierten Anhydroglucoseeinheiten der Formel I bis zu etwa 100 Mol-%, insbesondere im Bereich von etwa 70 Mol-% bis 95 Mol-% aufweisen.

Die Aufbereitung der bei den kontinuierlichen Reaktionsverfahren anfallenden Polycarboxylate, zum Beispiel die Reinigung der Rohprodukte durch Wasserwäsche ist nach üblichen, für diskontinuierliche Verfahren beschriebenen Methoden möglich.

Die Wäsche kann diskontinuierlich durchgeführt werden, indem man die rohen Polycarboxylate - gegebenenfalls nach Abtrennen des verwendeten Suspensionsmittels durch Filtrieren, Zentrifugieren oder Destillieren - in einem Rührbehälter in Wasser suspendiert. Aus der resultierenden Suspension können die Polysaccharidderivate durch Filtrieren oder Zentrifugieren isoliert werden.

Für das beanspruchte Verfahren sind naturgemäß kontinuierliche Aufbereitungsverfahren besonders vorteilhaft. Bei diesen wird das Reaktionsprodukt nach Verlassen des Reaktors und Abtrennen eines Suspensionsmittels in Wasser aufgenommen und kontinuierlich betriebenen Filtern oder Zentrifugen, auf denen gegebenenfalls eine Nachwäsche mit Wasser erfolgen kann, zugeführt.

Die gereinigten, wasserhaltigen Polycarboxlate werden entweder direkt oder aber nach Entwässern durch Behandlung mit einem wassermischbaren Lösungsmittel getrocknet. Die gereinigten feuchten Produkte können auch, wie nachstehend beschrieben, in die Salzform umgewandelt und in Lösung gebracht werden.

So ist es im Anschluß an die Oxidationsreaktion und die gewünschtenfalls vorgenommene oben beschriebene Aufarbeitung möglich, wenigstens einen Teil der Carboxylgruppen des Oxidationsprodukts durch Behandeln mit einem basischen Reagenz zu neutralisieren, das heißt von der Säure- in die Salzform zu überführen. Der Neutralisationsschritt wird vorzugsweise auch kontinuierlich vorgenommen. Als Neutralisationsmittel wird vorzugsweise eine wäßrige Lösung, die basische Alkaliverbindung, insbesondere Alkalihydroxid, Alkalicarbonat, Alkalihydrogencarbonat, und/oder Ammoniumhydroxid und/oder organische Base enthält, verwendet. Bevorzugt wird ein Alkalihydroxid, insbesondere Natriumhydroxid, Natriumhydrogencarbonat oder Natriumcarbonat eingesetzt. Auch direkt im Anschluß an die Oxidationsreaktion ist die Neutralisation möglich, beispielsweise durch Begasen des Rohprodukts mit Ammoniak. Die Salzbildung ist auch unter reduzierenden Bedingungen, beispielsweise unter Verwendung von Natriumborhydrid, möglich. Vorzugsweise wird das Neutralisationsmittel in solchen Mengen eingesetzt, daß sämtliche Carboxylgruppen des Oxidationsprodukts in die Salzform überführt werden. Dabei ist sowohl die Zugabe des Oxidationsproduktes zum Neutralisationsmittel als auch die Zugabe des Neutralisationsmittels zum Oxidationsprodukt möglich. Die Salzbildung kann auch bei der Anwendung beziehungsweise Weiterverarbeitung der in Säureform vorliegenden Polycarboxylate erfolgen, beispielsweise bei der Herstellung oder dem Einsatz von Wasch- oder Reinigungsmitteln durch übliche alkalische Bestandteile derartiger Mittel.

Die nach dem erfindungsgemäßen Verfahren hergestellten Polycarboxylate werden vorzugsweise als Builder oder Co-Builder in Wasch- oder Reinigungsmitteln verwendet. In derartigen Mitteln werden sie vorzugsweise als Co-Builder in Mengen von 0,5 Gew.-% bis 10 Gew.-%, insbesondere 2 Gew.-% bis 7 Gew.-%, bezogen jeweils auf das Gesamtgewicht des Mittels, die anorganischen wasserunlöslichen Haupt-Builder enthalten, verwendet. Besonders bevorzugt werden sie in letztgenannten Mitteln verwendet, die Zeolith-NaA, wie er beispielsweise im Zusammenhang mit Textilwaschmitteln in der deutschen Patentschrift DE 24 12 837 beschrieben ist, als Haupt-Builder und erfindungsgemäß hergestellte Polycarbonsäuren oder deren Salze in Mengenverhältnissen von 2:1 bis 5:1 enthalten. Die Zusammensetzung der Wasch- und/oder Reinigungsmittel kann ansonsten im Rahmen bekannter Rezepturen praktisch beliebig gewählt werden.

Die erfindungsgemäß hergestellten Polycarbonsäuren eignen sich außerdem zur Verwendung in Geschirrspülmitteln. Geschirrspülmittel für die maschinelle Reinigung von Geschirr der neuesten phosphatfreien Generation enthalten neben oberflächenaktiven Stoffen Oxidationsmittel auf Sauerstoffbasis und eine relativ komplex aufgebaute Builderkombination aus Alkalicarbonaten und organischen Komplexbildnern. Zu den bisher eingesetzten organischen Komplexbildnern gehören Organophosphonsäuren, Hydroxycarbonsäuren, Aminocarbonsäuren und insbesondere polymere Polycarbonsäuren, die oft in Mischung mit niedermolekularen Polyhydroxypolycarbonsäuren, beispielsweise Zitronensäure, eingesetzt werden, beziehungsweise deren wasserlösliche Salze. Zusätzlich ist in der Regel als weitere Builderkomponente Akalisilikat vorhanden. Derartig zusammengesetzte Mittel weisen häufig, insbesondere bei relativ hohen Wasserhärten, den Nachteil der Ausbildung von Kalkbelägen, sowohl in der eingesetzten Geschirrspülmaschine als insbesondere auch auf dem gereinigten Spülgut, auf. Durch Einsatz einer Builderkombination, welche bestimmte Oxidationsprodukte von Polyglucosanen enthält, kann eine Inhibierung der durch das Geschirrspülmittel in Verbindung mit den Härtebestandteilen des Wassers verursachten Belagsbildung erreicht werden. In einer weiteren vorteilhaften Ausführungsform der Erfindung wird daher vorgeschlagen, die gemäß dem oben genannten Verfahren hergestellten Polycarbonsäuren oder deren Salze als Builder oder als Bestandteil einer Builderzusammensetzung in Geschirrspülmitteln zu verwenden, die insbesondere für die maschinelle Reinigung von Geschirr vorgesehen sind.

Die nach dem erfindungsgemäßen Verfahren hergestellten Polycarboxylate sind außerdem als Inkrustationsinhitoren gegen Kalkablagerungen in von Wasser durchströmten Rohrleitungen und Apparaten, zum Beispiel in Kühlwassersystemen, sehr gut geeignet.

Eine weitere vorteilhafte Verwendung finden diese Polycarboxylate als Hilfsmittel in keramischen Massen zur Verbesserung der plastischen Formgebungseigenschaften.

Das beanspruchte Verfahren wird durch die nachfolgend beschriebenen Beispiele zur NO₂-Oxidation von Stärke im Suspensionsverfahren näher anhand der einzigen Zeichnung erläutert.

### Beispiele

### Beispiel 1

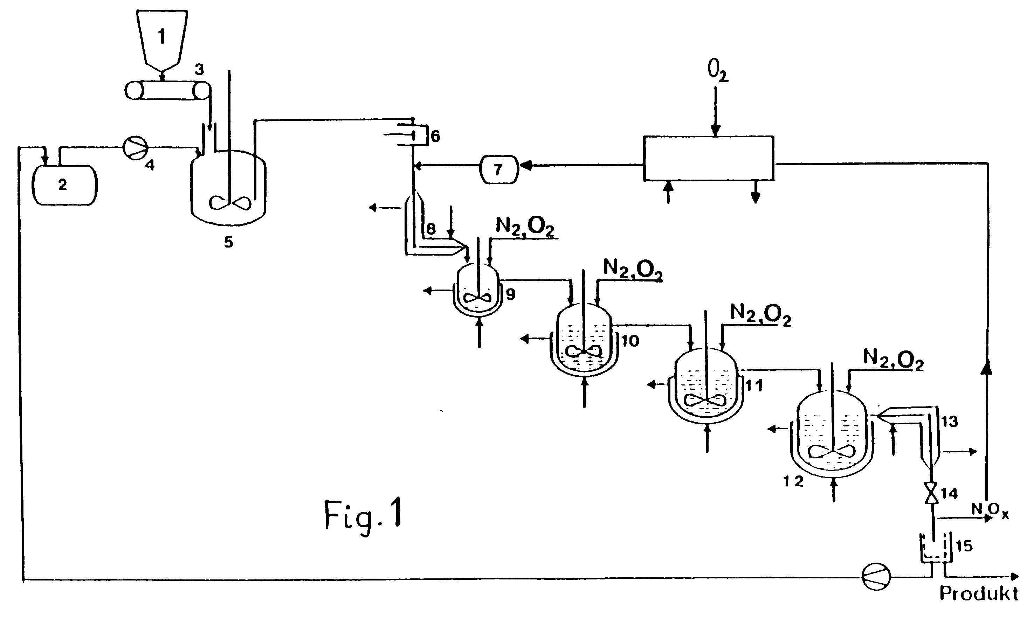

Das Beispiel 1 beschreibt die Oxidation von Stärke in der in Figur 1 gezeigten Rührkesselkaskade. Die Rührkesselkaskade besteht aus 4 Einzelkesseln, die so ausgelegt sind, daß jeweils das Nutzvolumen des nachfolgenden Kessels das doppelte des vorangehenden aufweist. Das Gesamtnutzvolumen beträgt ca. 250 l.

Jeder Kessel ist mit einem separat angetriebenen Rührsystem mit Drehzahlregulierung und einer getrennt regelbaren Mantelkühlung bzw. -heizung ausgestattet.

Pro Stunde wurden 120 kg Stärke mit einem Wassergehalt von ca. 4 Gew.-% über eine Dosierbandwaage 3 aus dem Behälter 1 und 956 kg Tetrachlorkohlenstoff aus dem Behälter 2 über eine Dosierpumpe 4 kontinuierlich dem Anmaischbehälter 5 zugeführt. Die resultierende Stärkesuspension wurde über eine weitere Dosierpumpe 6 kontinuierlich mit einer Menge von ca. 1076 kg/h entnommen und über eine Aufheizstrecke 8 in die aus den Rührkesseln 9 bis 12 bestehende Rührkesselkaskade eingespeist.

Vor Eintritt in die Aufheizstrecke wurden der Suspension 65,4 kg/h verflüssigtes Distickstofftetroxid aus dem Behälter 7 zudosiert.

Am Ende der Aufheizstrecke hatte die Reaktionsmischung eine Temperatur von ca. 90 °C erreicht. Sie passierte dann die Rührkessel 9 bis 12, in denen sie auf Temperaturen von ca. 95 °C Rührkessel 9), 105 °C (Rührkessel 10), 115 °C (Rührkessel 11) und 125 °C (Rührkessel 12) aufgeheizt wurde.

In der Rührkesselkaskade stellte sich ein Druck von ca. 15 bar ein.

Nach Verlassen des Rührkessels 12 passierte das Reaktionsgemisch die Kühlstrecke 13, in der sie auf ca. 65 bis 70 °C abgekühlt wurde. Anschließend wurde über das Ventil 14 entspannt. Die dabei entweichenden nitrosen Gase wurden unter Luftzufuhr oxidiert und zum Vorratsbehälter 7 für Distickstofftetroxid zurückgeführt.

Die Reaktionsmischung wurde dann einer kontinuierlich arbeitenden Zentrifuge 15 zugeführt. Die Hauptmenge des Tetrachlorkohlenstoffs wurde abgeschleudert und nach Extraktion mit Wasser in den Vorratsbehälter 2 zurückgepumpt.

Das an dem Feststoff haftende Lösungsmittel wurde im Vakuum abgedampft, kondensiert und ebenfalls in den Vorratsbehälter 2 zurückgeführt.

Die rohe Carboxylstärke wurde mit Wasser gewaschen und anschließend bis auf eine Restfeuchte von ca. 6 Gew.-% getrocknet.

Erhalten wurden ein weißes Produkt mit einer Säurezahl von ca. 290, die einem durchschnittlichen Gehalt von ca. 0,9 Carboxylgruppen/Anhydroglucoseeinheit entspricht.

Zur Bestimmung der Säurezahl wurden ca. 0,5 g bis 0,75 g der Carboxylstärke in 50 ml entmineralisiertem Wasser suspendiert. Die Suspension wurde mit 10 ml 0,5 n alkoholischer Kaliumhydroxidlösung versetzt und 30 Minuten bei Raumtemperatur gerührt; das Stärkederivat ging dabei in Lösung. Überschüssiges Kaliumhydroxid wurde mit 0,5 n wäßriger Salzsäure gegen Phenolphthalein als Indikator zurücktitriert.

### Beispiel 2

Beispiel 1 wurde wiederholt mit dem Unterschied, daß der Stärkesuspension vor Eintritt in die Aufheizstrecke 32,7 kg/h verflüssigtes Distickstofftetroxid zudosiert wurden und in der Rührkesselkaskade mit Stickstoff ein Druck von ca. 6 bar absolut eingestellt wurde, der durch Nachdosieren von Sauerstoff annähernd konstant gehalten wurde.

Nach Aufbereitung des Reaktionsgemisches wurde eine Carboxylstärke mit einer Säurezahl von ca. 320, entsprechend einem Gehalt von ca. 1 Carboxylgruppe/Anhydroglucoseeinheit, erhalten.

### Beispiel 3

Beispiel 2 wurde wiederholt mit dem Unterschied, daß die Rührkesselkaskade durch eine in 12 Kammern unterteilte Rührkolonne ersetzt wurde.

Bei einer Kolonnenlänge von 2,5 m und einem Durchmesser von 0,4 m hatte dieser Reaktor ein Nutzvolumen von ca. 295 l. Hinsichtlich des Stufenwirkungsgrads entsprach die Kolonne einer Kaskadenanordnung mit 6 bis 7 gleichgroßen Einzelkesseln.

Die Kolonne wurde mit Preßluft bis zu einem Druck von ca. 5 bar mit Syntheseluft überlagert. Dieser Druck wurde mittels Nachdosierung von Sauerstoff konstant gehalten.

Die Temperatur des Reaktionsgemisches betrug ca. 95 °C am Ende der Aufheizstrecke, ca. 105 °C im 1., ca. 120 °C im 2. und ca. 130 °C im 3. Drittel der Kolonne. Die mittlere Verweilzeit betrug ca. 25 Minuten.

Nach Aufbereitung des Reaktionsgemisches analog der in Beispiel 1 beschriebenen Verfahrensweise wurde eine Carboxylstärke mit einer Säurezahl von 310, entsprechend einem Gehalt von ca. 1 Carboxylgruppe/Anhydroglucoseeinheit, erhalten.

### Bezugszeichenliste

- 1: Vorratsbehälter für Stärke
- 2: Vorratsbehälter für Tetrachlorkohlenstoff
- 3: Dosierbandwaage
- 4: Dosierpumpe
- 5: Anmaischbehälter
- 6: Pumpe
- 7: Vorratsbehälter für Distickstofftetroxid
- 8: Aufheizstrecke
- 9-12: Rührkessel
- 13: Kühlstrecke
- 14: Druckreduktion
- 15: Zentrifuge

## Patentansprüche

1. Verfahren zur Herstellung von Polycarbonsäuren oder deren Salzen aus Polysacchariden durch Oxidation mit Stickstoffdioxid/Distickstofftetroxid unter Umwandlung zumindest eines Teils der primären Alkoholgruppen der Polysaccharide in Carboxylgruppen sowie gegebenenfalls wenigstens anteilsweiser Neutralisation der entstehenden Carbonsäuregruppen, dadurch gekennzeichnet, daß man die Oxidationsreaktion in einem kontinuierlichen Verfahren bei einer Temperatur oberhalb von 80 °C in Gegenwart oder Abwesenheit von Sauerstoff in einem geschlossenen Reaktionssystem bei Drücken von 3 bar bis 15 bar absolut, gemessen bei der Reaktionstemperatur durchführt und eine Verweilzeit des Reaktionsgemisches in der Reaktionszone von 1 bis 30 min einstellt.

2. Verfahren nach Anspruch 1, dadurch gekennzeichnet, daß man die Oxidationsreaktion bei Temperaturen von 100 °C bis 140 °C, bevorzugt 100 °C bis 130 °C und insbesondere 110 °C bis 120 °C durchführt.

3. Verfahren nach Anspruch 1 oder 2, dadurch gekennzeichnet, daß man eine Verweilzeit des Reaktionsgemisches in der Reaktionszone von 5 bis 30 min und insbesondere von 10 bis 30 min einstellt.

4. Verfahren nach einem der Ansprüche 1 bis 3, dadurch gekennzeichnet, daß man die Oxidation der Polysaccharide in Abwesenheit von Sauerstoff als Cooxidans durchführt und dabei Stickstoffdioxid/Distickstofftetroxid in solchen Mengen einsetzt, daß bei rechnerisch vollständiger Verschiebung des Gleichgewichtes auf die Seite des Stickstoffdioxids dieses in Mengen von 0,1 bis 3 Molequivalenten, insbesondere 0,3 bis 2 Molequivalenten, bezogen auf den eine primäre Alkoholgruppe enthaltenden Monomerbaustein des Polysaccharids, enthalten ist.

5. Verfahren nach Anspruch 4, dadurch gekennzeichnet, daß man die Gasphase am Ende der Reaktionszone nach Oxidation des Stickstoffmonoxids zu Stickstoffdioxid zurückführt.

6. Verfahren nach einem der Ansprüche 1 bis 3, dadurch gekennzeichnet, daß man die Oxidation der Polysaccharide in Gegenwart von Sauerstoff als Cooxidans durchführt und dabei Stickstoffdioxid/Distickstofftetroxid in solchen Mengen einsetzt, daß bei rechnerisch vollständiger Verschiebung des Gleichgewichts auf die Seite des Stickstoffdioxids dieses in Mengen von höchstens 2 Molequivalenten, insbesondere 0,1 bis 1 Molequivalenten, bezogen auf den eine primäre Alkoholgruppe enthaltenden Monomerbaustein des Polysaccharids, enthalten ist.

7. Verfahren nach Anspruch 6, dadurch gekennzeichnet, daß man den Druck im Reaktionssystem durch Aufpressen von gasförmigem Sauerstoff oder durch Aufpressen eines Gemisches aus Sauerstoff mit mindestens einem unter den Reaktionsbedingungen inerten Gas konstant hält, wobei der Sauerstoffanteil in der Gasmischung 1 Vol.-% bis 30 Vol.-%, insbesondere 3 Vol.-% bis 10 Vol.-% beträgt und als inertes Gas bevorzugt Helium, Argon, Kohlendioxid, insbesondere Stickstoff, oder ein Gemisch aus diesen eingesetzt wird.

8. Verfahren nach Anspruch 6 oder 7, dadurch gekennzeichnet, daß man den Sauerstoff in Form von Luft, insbesondere von Syntheseluft einsetzt.

9. Verfahren nach einem der Ansprüche 1 bis 8, dadurch gekennzeichnet, daß als Polysaccharid ein Polyglucosan insbesondere nativen Ursprungs eingesetzt und die Oxidationsreaktion mit solchen Verweilzeiten durchgeführt wird, daß das Oxidationsprodukt im statistischen Mittel zu wenigstens 15 Mol-%, insbesondere zu wenigstens 25 Mol-%, besonders bevorzugt zu wenigstens 35 Mol-% aus oxidierten Anhydroglucoseeinheiten der Formel I 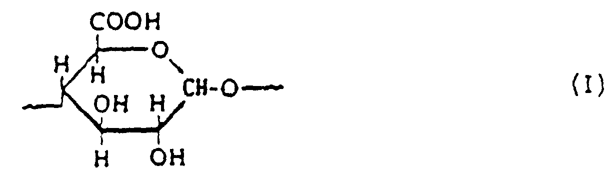 besteht, wobei weiterhin bevorzugt keine wesentlichen Mengen anderer Oxidations-Folgeprodukte vorliegen und der Gehalt an oxidierten Anhydroglucoseeinheiten der Formel I bis zu etwa 100 Mol-%, insbesondere im Bereich von etwa 70 Mol-% bis etwa 95 Mol-% beträgt.

10. Verfahren nach einem der Ansprüche 1 bis 9, dadurch gekennzeichnet, daß man das Polysaccharid in Form einer Suspension in einer unter den Reaktionsbedingungen weitgehend inerten Flüssigkeit, insbesondere einem halogenierten Kohlenwasserstoff, bevorzugt Tetrachlorkohlenstoff, einsetzt.

11. Verfahren nach Anspruch 10, dadurch gekennzeichnet, daß man die Reaktion in einem Rohrreaktor mit einem statischen Mischer oder in einer Rührkesselkaskade mit mindestens 2 Stufen oder in einem Durchlaufmischer oder in einer in mindestens 2 Kammern unterteilten Rührkolonne durchführt.

12. Verfahren nach einem der Ansprüche 1 bis 9, dadurch gekennzeichnet, daß man pulverförmiges Polysaccharid in Abwesenheit eines Suspensions- oder Lösungsmittels einsetzt und die Reaktion in einem Gas-Feststoff-Reaktor durchführt.

13. Verfahren nach Anspruch 12, dadurch gekennzeichnet, daß man die Reaktion in einem Schüttschichtreaktor, insbesondere einem Drehrohrofen, oder in einem Wirbelschichtreaktor, insbesondere einem Fließbettreaktor, oder in einem Durchlaufmischer, insbesondere einem Kontimischer oder Online-Mischer durchführt.

14. Verfahren nach einem der Ansprüche 1 bis 13, dadurch gekennzeichnet, daß das Polysaccharid ein Polyglucosan nativen Ursprungs, insbesondere Stärke und/oder Cellulose, ist, wobei die Stärke aus Kartoffelstärke, Weizenstärke, Maisstärke, Tapiokastärke und deren Gemischen ausgewählt ist.

15. Verfahren nach einem der Ansprüche 1 bis 14, dadurch gekennzeichnet, daß man in einem kontinuierlich betriebenen Aufarbeitungsverfahren das Rohprodukt nach dem Abtrennen eines gegebenenfalls vorliegenden Suspensionsmittels einer Wäsche mit Wasser unterzieht und gegebenenfalls in den zur Abtrennung des Waschwassers vorgesehenen Einrichtungen, insbesondere Filtern und/oder Zentrifugen, eine Nachwäsche des Produktes mit Wasser vornimmt.

16. Verfahren nach einem der Ansprüche 1 bis 15, dadurch gekennzeichnet, daß anschließend an die Oxidationsreaktion mindestens ein Teil der Carboxylgruppen des Oxidationsprodukts durch Behandeln mit einer wäßrigen Lösung, die basische Alkaliverbindung, insbesondere Alkalihydroxid, Alkalicarbonat, Alkalihydrogencarbonat, und/oder Ammoniumhydroxid und/oder organische Base enthält, vorzugsweise in einem kontinuierlichen Verfahren neutralisiert wird.

## Claims

1. A process for the production of polycarboxylic acids or salts thereof from polysaccharides by oxidation with nitrogen dioxide/dinitrogen tetroxide with at least partial conversion of the primary alcohol groups of the polysaccharides into carboxyl groups and optionally at least partial neutralization of the carboxylic acid groups formed, characterized in that the oxidation reaction is carried out continuously at a temperature above 80°C in the presence or absence of oxygen in a closed reaction system under pressures of 3 bar to 15 bar absolute, as measured at the reaction temperature, and in that a residence time of the reaction mixture in the reaction zone of 1 to 30 minutes is adjusted.

2. A process as claimed in claim 1, characterized in that the oxidation reaction is carried out at temperatures of 100°C to 140°C, preferably at temperatures of 100°C to 130°C and more preferably at temperatures of 110°C to 120°C.

3. A process as claimed in claim 1 or 2, characterized in that a residence time of the reaction mixture in the reaction zone of 5 to 30 mins. and, more particularly, 10 to 30 mins. is adjusted.

4. A process as claimed in any of claims 1 to 3, characterized in that the oxidation of the polysaccharides is carried out in the absence of oxygen as co-oxidant and nitrogen dioxide/dinitrogen tetroxide is/are used in such quantities that, where the equilibrium is theoretically completely displaced onto the side of the nitrogen dioxide, the nitrogen dioxide is present in quantities of 0.1 to 3 mole equivalents and, more particularly, 0.3 to 2 mole equivalents, based on the monomer unit of the polysaccharide containing a primary alcohol group.

5. A process as claimed in claim 4, characterized in that the gas phase is recycled at the end of the reaction zone after oxidation of the nitrogen monoxide to nitrogen dioxide.

6. A process as claimed in any of claims 1 to 3, characterized in that the oxidation of the polysaccharides is carried out in the presence of oxygen as co-oxidant and nitrogen dioxide/dinitrogen tetroxide is/are used in such quantities that, where the equilibrium is theoretically completely displaced onto the side of the nitrogen dioxide, the nitrogen dioxide is present in quantities of at most 2 mole equivalents and, more particularly, 0.1 to 1 mole equivalent, based on the monomer unit of the polysaccharide containing a primary alcohol group.

7. A process as daimed in claim 6, characterized in that the pressure in the reaction system is kept constant by introduction of gaseous oxygen under pressure or by the introduction under pressure of a mixture of oxygen and at least one gas which is inert under the reaction conditions, the percentage oxygen content of the gas mixture being 1% by volume to 30% by volume and, more particularly, 3% by volume to 10% by volume and helium, argon, carbon dioxide and especially nitrogen, or a mixture thereof, preferably being used as the inert gas.

8. A process as claimed in claim 6 or 7, characterized in that the oxygen is used in the form of air, more particularly synthesis air.

9. A process as claimed in any of claims 1 to 8, characterized in that a polyglucosan, more particularly of native origin, is used as the polysaccharide and the oxidation reaction is carried out with such residence times that, on a statistical average, at least 15 mole-%, preferably at least 25 mole-% and more preferably at least 35 mole-% of the oxidation product consists of oxidized anhydroglucose units corresponding to formula I: 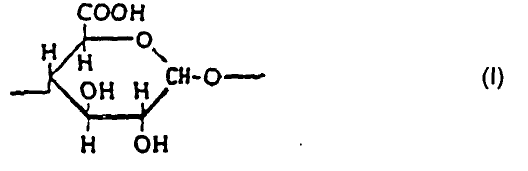 preferably no significant quantities of other secondary oxidation products being present and the content of oxidized anhydroglucose units corresponding to formula I being up to about 100 mole-% and, more particularly, in the range from about 70 mole-% to about 95 mole-%.

10. A process as claimed in any of claims 1 to 9, characterized in that the polysaccharide is used in the form of a suspension in a liquid which is substantially inert under the reaction conditions, more particularly a halogenated hydrocarbon, preferably carbon tetrachloride.

11. A process as claimed in claim 10, characterized in that the reaction is carried out in a tube reactor with a static mixer or in a cascade of stirred tank reactors comprising at least two stages or in a continuous mixer or in a stirred column divided into at least two compartments.

12. A process as claimed in any of claims 1 to 9, characterized in that powder-form polysaccharide is used in the absence of a suspending agent or solvent and the reaction is carried out in a gas/solid reactor.

13. A process as claimed in claim 12, characterized in that the reaction is carried out in a loose-bed reactor, more particularly in a rotating tube fumace, or in a fluidized bed reactor or in a continuous mixer or online mixer.

14. A process as claimed in any of claims 1 to 13, characterized in that the polysaccharide is a polyglucosan of native origin, more particularly starch and/or cellulose, the starch being selected from potato starch, wheat starch, comstarch, tapioca starch and mixtures thereof.

15. A process as claimed in any of claims 1 to 14, characterized in that, after removal of any suspending agent present, the crude product is washed with water in a continuous working-up process and is optionally rewashed with water in the units used to remove the washing water, more particularly filters and/or centrifuges.

16. A process as claimed in any of claims 1 to 15, characterized in that, after the oxidation reaction, the carboxyl groups of the oxidation product are at least partly neutralized by treatment with an aqueous solution containing basic alkali metal compound, more particularly alkali metal hydroxide, alkali metal carbonate, alkali metal hydrogen carbonate, and/or ammonium hydroxide and/or organic base, preferably in a continuous process.

## Revendications

1. Procédé de fabrication d'acides polycarboxyliques ou de sels de ceux-ci à partir de polysaccharides, par oxydation avec du dioxyde/tétroxyde d'azote, avec transformation d'au moins une partie des groupes alcool primaires en groupes carboxyle, ainsi que le cas échéant, neutralisation au moins partielle des groupes d'acide carboxylique formés, caractérisé en ce que l'on opère la réaction d'oxydation dans un procédé continu, à une température supérieure à 80 °C, en présence ou en l'absence d'oxygène, dans un système réactionnel fermé, à des pressions absolues de 3 à 15 bars, mesurées à la température réactionnelle, et on impose une durée de séjour du mélange réactionnel dans la zone réactionnelle de 1 à 30 minutes.

2. Procédé selon la revendication 1, caractérisé en ce que l'on opère la réaction d'oxydation à des températures de 100 à 140 °C, de préférence de 100 à 130 °C et en particulier, de 110 à 120 °C.

3. Procédé selon la revendication 1 ou 2, caractérisé en ce que l'on impose une durée de séjour du mélange réactionnel dans la zone réactionnelle de 5 à 30 minutes et, en particulier, de 10 à 30 minutes.

4. Procédé selon une des revendications 1 à 3, caractérisé en ce que l'on opère l'oxydation des polysaccharides en l'absence d'oxygène comme co-oxydant et que l'on met en oeuvre en l'espèce le dioxyde/tétroxyde d'azote en quantités telles qu'en cas de déplacement complet, calculé, de l'équilibre du côté du dioxyde d'azote, celui-ci est contenu en quantités de 0,1 à 3 équivalents molaires, en particulier de 0,3 à 2 équivalents molaires, par rapport au composant monomère du polysaccharide contenant un groupe alcool primaire.

5. Procédé selon la revendication 4, caractérisé en ce que l'on recycle la phase gazeuse à la fin de la zone réactionnelle, après l'oxydation du monoxyde. d'azote en dioxyde d'azote.

6. Procédé selon une des revendications 1 à 3, caractérisé en ce que l'on opère l'oxydation des polysaccharides en présence d'oxygène, en tant que co-oxydant, et que l'on met en oeuvre en l'espèce le dioxyde/tétroxyde d'azote en quantités telles qu'en cas de déplacement complet, calculé, de l'équilibre du côté du dioxyde d'azote, celui-ci est contenu en quantités de 2 équivalents molaires au maximum, en particulier de 0,1 à 1 équivalent molaire, par rapport au composant monomère du polysaccharide contenant un groupe alcool primaire.

7. Procédé selon la revendication 6, caractérisé en ce que l'on maintient constante la pression dans le système réactionnel par compression d'oxygène gazeux ou d'un mélange d'oxygène avec au moins un gaz inerte dans les conditions réactionnelles, la proportion d'oxygène dans le mélange gazeux atteignant de préférence 1 à 30 % en volume, en particulier 3 à 10 % en volume, et que l'on met en oeuvre comme gaz inerte, de préférence, de l'hélium, de l'argon, du dioxyde de carbone, en particulier de l'azote, ou un mélange de ceux-ci.

8. Procédé selon la revendication 6 ou 7, caractérisé en ce que l'on met en oeuvre l'oxygène sous forme d'air, en particulier d'air synthétique.

9. Procédé selon une des revendications 1 à 8, caractérisé en ce que l'on met en oeuvre comme polysaccharide, un polyglucosane en particulier d'origine native et en ce que la réaction d'oxydation est opérée avec des temps de séjour tels que le produit d'oxydation est constitué en moyenne statistique à raison d'au moins 15 moles %, de préférence à raison d'au moins 25 moles %, en particulier à raison d'au moins 35 moles % d'unités d'anhydroglucose oxydées de la formule I 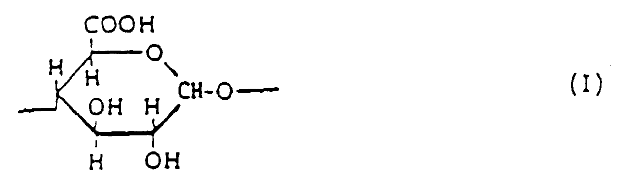 aucune quantité importante d'autres descendants de l'oxydation n'étant en outre présente et sa concentration en unités d'anhydroglucose oxydées de la formule I allant jusqu'à environ 100 moles %, étant de préférence comprise dans l'intervalle d'environ 70 à environ 95 moles %.

10. Procédé selon une des revendications 1 à 9, caractérisée en ce que l'on met en oeuvre le polysaccharide sous la forme d'une suspension dans un liquide largement inerte dans les conditions réactionnelles, en particulier dans un hydrocarbure halogéné, de préférence dans du tétrachlorure de carbone.

11. Procédé selon la revendication 10, caractérisé en ce que l'on opère la réaction dans un réacteur tubulaire doté d'un mélangeur statique ou dans une cascade de cuves à agitation comportant au moins 2 étages ou dans un mélangeur de passage ou dans une colonne à agitation divisée en au moins 2 chambres.

12. Procédé selon une des revendications 1 à 9, caractérisé en ce que l'on met en oeuvre du polysaccharide pulvérulent en l'absence d'un agent de suspension ou d'un solvant, et en ce que l'on opère la réaction dans un réacteur à "gaz-matière solide".

13. Procédé selon la revendication 12, caractérisé en ce que l'on opère la réaction dans un réacteur à lit tassé, en particulier dans un four rotatif, ou dans un réacteur à couche fluidisée, en particulier dans un réacteur à lit fluidisé, ou dans un mélangeur à passage, en particulier, dans un mélangeur continu ou dans un mélangeur on-line.

14. Procédé selon une des revendications 1 à 13, caractérisé en ce que le polysaccharide est un polyglucosane d'origine native, en particulier de l'amidon/et ou de la cellulose, l'amidon étant sélectionné parmi l'amidon de pomme de terre, de froment, de maïs et de tapioca ou les mélanges de ceux-ci.

15. Procédé selon une des revendications 1 à 14, caractérisé en ce que dans un procédé de traitement opéré en continu, on soumet le produit brut - après séparation d'un agent de suspension éventuellement présent - à un lavage à l'eau et que l'on procède, le cas échéant, à un lavage postérieur du produit dans les dispositifs prévus pour la séparation de l'eau de lavage, en particulier dans des filtres et/ou des centrifugeuses.

16. Procédé selon une des revendications 1 à 15, caractérisé en ce qu'à la suite de la réaction d'oxydation, au moins une partie des groupes carboxyle du produit d'oxydation est neutralisée, de préférence dans un procédé continu, par traitement avec une solution aqueuse, qui contient un composé basique de métal alcalin, en particulier un hydroxyde, un carbonate de métal alcalin, un hydrogénocarbonate de métal alcalin, et/ou de l'hydroxyde d'ammonium et/ou une base organique.
